# EUROPEAN PATENT APPLICATION

(11) **EP 1 271 069 A1**
(43) Date of publication of application: **02.01.2003**
(21) Application number: 02077091.3
(22) Date of filing: 28.05.2002
(51) Int. Cl.: F24H 3/06, B60H 1/00

(54) **Heating device for a space**

(30) Priority: 30.05.2001 NL 1018183
(71) Applicant: Dunk, Frans Jan Arnold, 6031 LL Nederweert (NL)
(72) Inventor: Dunk, Frans Jan Arnold, 6031 LL Nederweert (NL)
(74) Representative: Valkonet, Rutger

(57) **Abstract**

A device for heating a space, which device comprises a housing with heating mains present therein, at least one passage including an inlet and an outlet, which has been formed in the housing, ventilating means arranged between the inlet and the outlet of said passage for supplying low-temperature air via the inlet and exhausting air having a higher temperature, which has been heated by the heating means, to the interior via said outlet, wherein according to the invention the heating element is a gas burner and in that a second passage is present in the housing, which passage includes an inlet located outside said space and an outlet located outside said space, and wherein second ventilating means are placed between the inlet and the outlet of the second passage for supplying outside air for the gas burner via the inlet and exhausting combustion gases into the outside environment via the outlet.

## Description

The present invention relates to a device for heating a space, which device comprises a housing with heating mains present therein, at least one passage including an inlet and an outlet, which has been formed in the housing, ventilating means arranged between the inlet and the outlet of said passage for supplying low-temperature air via the inlet and exhausting air having a higher temperature, which has been heated by the heating means, to the interior via said outlet.

Such a space may be a room, for example, but also the space or the interior of a vehicle, such as a car or a lorry, a caravan, the cabin of a (pleasure) craft, etc.

A device as referred to in the introduction, which is used for heating the interior of a vehicle, is known, for example from International patent application No PCT/US90/03766, published under No W091/00811. To this end, electric heating means are used, and the heating device can be connected to the electricity mains by means of a cord and a plug. Heat is generated by means of electricity, which heat is blown into the interior by means of the first ventilating means. Such a heating device can only be used to a limited extent, however, and that only if a connection to the electricity mains is available in the direct vicinity.

The object of the invention is to provide an improved and safe heating device for a space, for example the interior of a vehicle, which can be used not only in a reliable and functional manner, but also in an autonomous manner, i.e. independently of a fixed supply system, at several locations.

According to the invention, the heating device is characterized in that the heating element is a gas burner and in that a second passage is present in the housing, which passage includes an inlet located outside said space and an outlet located outside said space, and wherein second ventilating means are placed between the inlet and the outlet of the second passage for supplying outside air for the gas burner via the inlet and exhausting combustion gases into the outside environment via the outlet. The use of a gas burner provides an autonomous heating device which can readily be used at more than one location. Furthermore, the second passage provides a safe system, in which any combustion gases are prevented from entering the interior or the space to be heated, which might imply a health risk, especially when persons or animals are present in the space.

The housing of the device according to the invention may furthermore comprise a connection for a gas holder. The housing may comprise an external gas connection.

In one embodiment of the device according to the invention, the two passages in the housing are separated from each other, although they are in heat-exchanging contact with each other. Also this arrangement functions to prevent the interior of the space being polluted by combustion gases from the gas burner.

The gas inlet may be located in the second passage. In the case of leakage, the leaking gas will directly be exhausted into the outside environment, thus preventing accumulation of gas in the house and/or in the interior.

In another embodiment, the gas carrying part may be in direct communication with the outside environment and not be connected to the second passage any more.

The air used for the combustion process can be pre-heated by means of heat from the combustion gases that are to be exhausted. The temperature of the air can be controlled via a bypass. The air can be made to absorb heat by causing it to flow past the gas holder. The desired liquid temperature of the fuel can be achieved by supplying heat to the gas holder, thus preventing an undesirable temperature decrease, and thus a pressure decrease, caused by the evaporation of the liquid. Also possible decomposition of the fuel components is prevented in this way.

In order to obtain a proper heat-exchanging contract between the two passages, the two passages may be arranged side by side, which arrangement leads to a strongly improved heat-exchanging effect because the directions of flow of the air flowing through the two passages may be of opposite sense.

In another embodiment of the device according to the invention, the combustion gases to be exhausted are in heat-exchanging contact with the outside air to be supplied. With this arrangement, an improvement of the heating efficiency of the heating device can be realised.

In a more functional embodiment, the heating device according to the invention is characterized in that control means are arranged in the housing for turning the heating means on or off partly on the basis of the temperature difference between the space and the outside environment, the temperature inside and/or outside the space, the air humidity, the time, etc. Said control means may comprise sensors arranged on the housing and/or in the air, which sensors are placed on windows in the space, for example, and which measure the degree of defrosting.

A current source, for example of battery, may be present in the housing.

According to the invention, the housing may furthermore be provided with fixing means for fixing the housing round the upper edge of the window in a door of the vehicle.

The housing may be provided with fixing means for fixing the housing round the upper edge of the window in the door of the vehicle, wherein the housing may furthermore be provided with at least one flexible strip for sealing a chink that may be present if the window does not fully close.

The invention will now be explained in more detail with reference to a drawing, in which:
Figure 1 is a heating device according to the invention, arranged on a window of a vehicle for heating the interior of the vehicle;
Figure 2A is a view of a heating device according to the invention, seen from the space to be heated;
Figure 2B is a side elevation of Figure 2A;
Figure 2C is a view of the heating device as shown in Figure 2A, seen from outside the space to be heated;
Figure 3 shows a schematic, more detailed embodiment of the heating device according to the invention;
Figures 4A-4B show a schematic second embodiment of the heating device according to the invention to be mounted on a wall of the space to be heated;
Figures 5A-5B are partial views of components of the heating device of Figure 4A

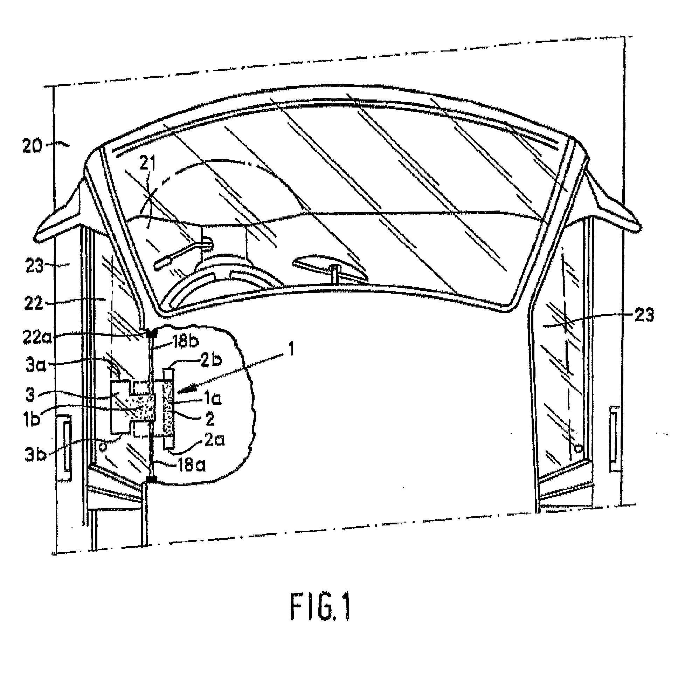

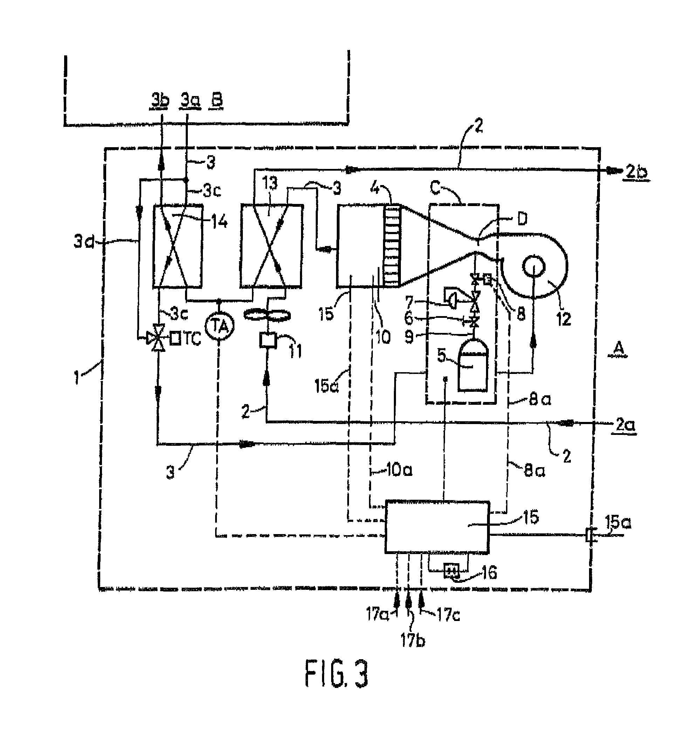

Figure 1 and, schematically, in more detail, Figure 3, show a heating device 1 for heating the interior of a vehicle 20. To this end, the housing 1 of the heating device is arranged on the upper edge 22a of a window 22 in the door 23. The housing 1 comprises a part 1a located within the interior or the space A to be heated, as well as a part 1b located outside the space to be heated. A passage to is provided in the interior house part 1a, in which passage ventilating means 11 are arranged. The passage includes an inlet 2a for supplying low-temperature air from the interior A, and as well as an outlet 2b, from which heated air having a higher temperature can be exhausted to the interior A.

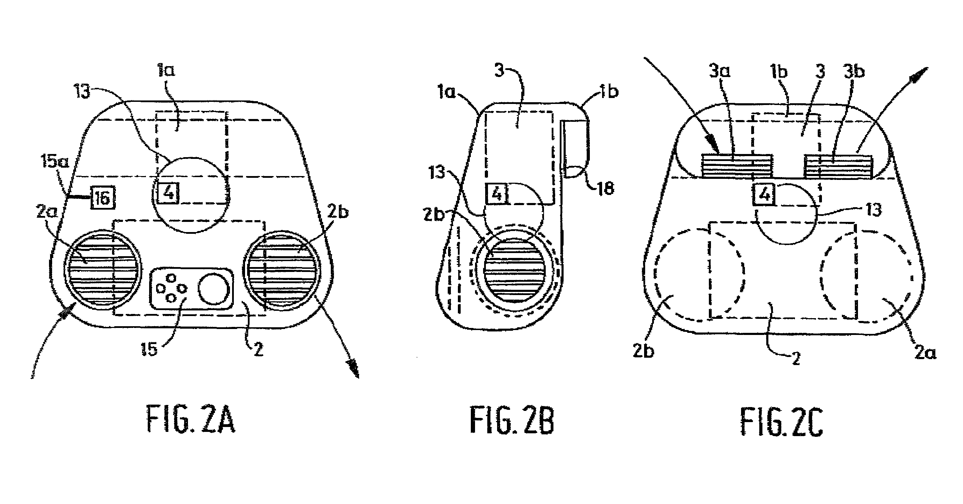

A heating element is arranged in the housing 1 for heating the air flowing through the passage 2, which heating element is in accordance with the invention a gas burner, which is indicated by numeral 4 in Figures 2A and 3. The gas burner 4 is fed with a gas in a well-known manner, which gas is supplied from a gas holder 5 via a supply line 9, which gas holder can be fitted within the housing 1, using a coupling which is known per se and a stop valve 6.

The inlet and outlet 2a and 2b, respectively, may be of simple design, as shown in Figure 2A, but they also may be in the form of a "jet pipe" as shown in Figure 1. The shape of the inlet and outlet 2a and 2b, respectively, may be adjusted so as to direct the inflowing air, but more in particular the hot, outflowing air, at one or more of the windows 21, 22, 23 of the interior A of the vehicle 20, for example.

According to the invention, the heating device 1 comprises a second passage 3. Also this second passage 3 includes an inlet 3a and an outlet 3b, as well as second ventilating means 12, which supply outside air via the inlet 3a and exhaust the combustion gases produced by the gas burner 4 in the second passage 3, via the outlet 3b. Thus, combustion gases are prevented from accumulating in the housing 1 and possibly finding their way into the interior A of the vehicle 20 that is to be heated. If persons and/or animals are present in the vehicle 20, the latter situation is highly undesirable for health reasons.

Furthermore, in order to prevent combustion gases finding their way into the interior A via the housing, the two passages 2 and 3 are separated from each other, although they are in heat-exchanging contact with each other. Said heat-exchanging contact is indicated at 13 in Figure 3, in which the two passages 2 and 3 are positioned near or directly adjacently to each other.

In order to achieve a strongly improved heat-exchanging effect, i.e. in order to transfer the heat produced by the gas burner 4 effectively to the interior air flowing through the passage 2, the direction of flow of the outside air flowing through the passage 3 is of opposite sense to the direction of flow of the interior air flowing through the passage 2 (see the directions indicated by the arrows in the heat-exchanging region 13 in Figure 3). Also in this embodiment, it is possible, however, to obtain a heat-exchanging effect by employing the unidirectional flow principle.

In order to obtain an improved combustion efficiency of the gas burner, the combustion gases to be exhausted are in heat-exchanging contact with the outside air to be supplied via the inlet 3a. In Figure 3 this is indicated as the heat-exchanging region 14. Thus, the outside air, which is usually colder, is heated before being mixed with the gas (from the gas pipe 9) by the ventilating means 12 via the passage 3 near position D, just before the burner 4.

The air which is made to flow round the gas holder 5 must not heat up too much and cause the gas pressure in the gas holder to rise to an unacceptably high level. The air temperature can be regulated by carrying the outside air for the combustion process entirely (via the passage 3c) or partially round the heat-exchanging region 14 (via the passage 3d). The pre-heated air for the combustion process which flows past the gas holder heats up the fuel in the gas holder 5. As a result of the evaporation of the gas, the temperature of the liquid fuel in the gas holder can decrease so much that the gas pressure will sink to a level at which no gas will flow from the gas holder 5 any more. Pre-heating the gas holder will result in a sufficiently high gas pressure within the gas holder, thus preventing decomposition of the various combustible components in the gas holder.

The two directions of flow in the passages 2 and 3 of the heat-exchanging region 14 may be of opposite or equal sense (unidirectional flow principle). The heat, or part of the heat for preheating the air for the combustion process may be obtained from other parts of the burner construction.

By having the gas supply to the gas burner 4 take place at least partially in the second passage 3, a safety aspect is incorporated, viz. the exhaustion of any leaking gas into the outside environment via the outlet 3b. This is indicated at C in Figure 3.

The housing 1 furthermore contains control means 15 for turning the gas burner on and off by means of a magnetic valve 8, which is to be actuated via a line 8a. Said turning on and off can take place fully automatically on the basis of the measurement of the temperature inside and outside the interior and the air humidity inside or outside the interior, using suitable sensors 17a- 17b etc. which are present on the housing or in the interior, or on the basis of a timer, which is likewise incorporated in the control means 15. The control means 15 can thus be programmed by the user in such a way that the control means 15 will ignite the gas burner 4, and thus pre-heat or defrost the interior, at a particular point in time, for example one quarter of an hour before the user is going to leave with the vehicle. Possibly, said turning on and off of the gas burner may take place by remote control by the user, for example by means of a remote-control unit, which may be an infrared remote-control unit, for example, which employs a radiographic or telecommunication link, such as a mobile telephone. The electronics of the control means 15 monitor the combustion process of the gas burner 4 as well as the heating-up process in the interior to be heated. The capacity and the duration of the operation of the gas burner 4 can be controlled on the basis of the temperature in the interior space and the outside temperature. Said control can also be carried out by means of other sensors, for example by means of a sensor which determines whether all the windows 21, 22 and 23 of the vehicle have been defrosted. Relevant settings and measuring quantities (such as the inside temperature and the outside temperature) can be shown on a display screen. The apparatus is provided with a number of small pushbuttons by means of which manual adjustments can be made, in particular inputting the personal user programme.

The housing 1 furthermore contains a small power source, for example a rechargeable battery 16 for supplying the control means 15 with power, which control means may furthermore be provided with status indicators for indicating the status of the internal batteries 16 and the gas supply present in the gas holder 5. The batteries 16 may be charged via the battery of the vehicle via a connection 15a, for example via the cigar lighter in the dashboard. The battery capacity may be sufficient for operating the entire heating unit autonomously.

According to the invention, the housing 1 may be provided with a slot 18, which makes it possible to fit the housing 1 round the edge 22a of the window 22 of the vehicle 20. The chink that may have formed between the upper edge 22a and the frame of the door 23 can be sealed by means of flexible strips 18a and 18b, in order to prevent unnecessary loss of heat from the interior A to the outside environment B or the ingress of combustion gases into the interior in this way.

Although the embodiment that is shown in the present application has been described herein with reference to a vehicle, it will be understood that the heating device according to the invention can also be used for all kinds of other spaces. In this connection, the cabin of a (pleasure) craft or a caravan, etc. may be considered.

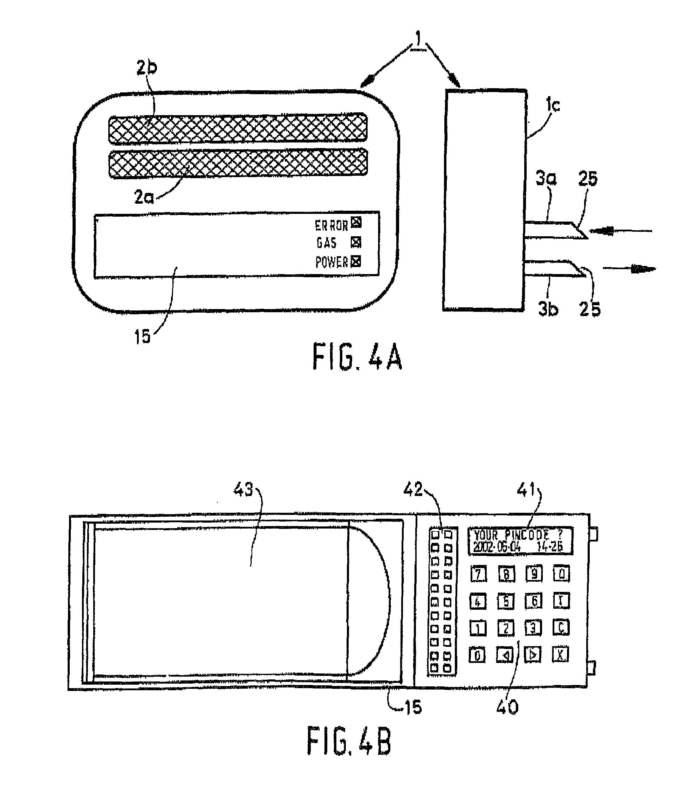

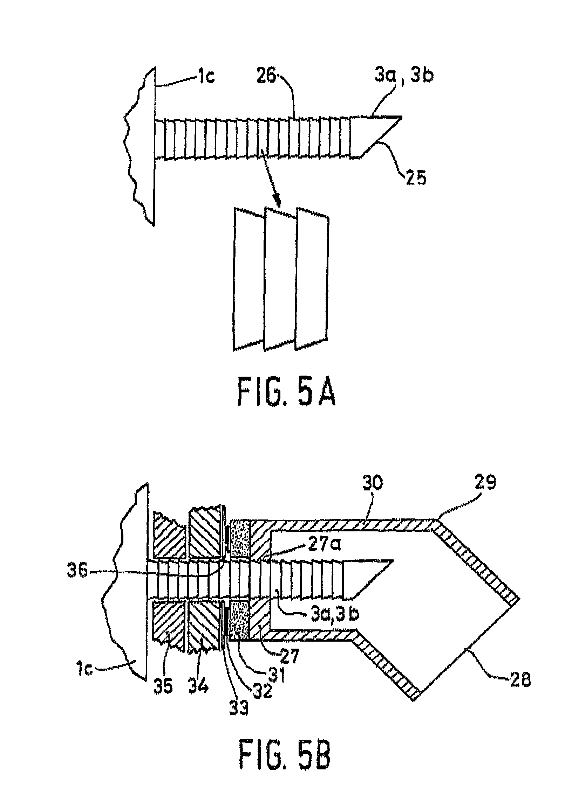

In Figures 4A-4B and in the partial views as shown in Figures 5A-5B, a different embodiment of the heating device according to the invention is shown. This embodiment discloses a heating device 1, which can be mounted on the wall of the space to be heated. Those parts in the embodiment of the heating device as shown in Figures 4A-4B and 5A-5B that correspond to parts of the embodiment according to the preceding drawings are indicated by the same reference numerals.

The heating device 1 that is schematically shown in Figure 4A again comprises a housing 1 including an inlet 2a for the interior air to be heated of the space that is to be heated as well as an outlet 2b for blowing the heated interior air into the space to be heated. Furthermore, the housing 1 contains the control means 15 by means of which the user can adjust or programme the heating device 1. As is shown in Figure 4B, the control means 15 according to the invention can be removed from the device 1, for example in order to enable the user to programme the device in a comfortable manner. In order to prevent theft, the control means can only be activated after a personal identification number (PIN code) has been inputted by the rightful user.

In order to enable programming of the heating device, the control means 15 are provided with a number of keys 40 as well as with a display screen 41, which may be a LCD screen, for example. Furthermore, the removable unit 15 comprises an electric connector 42, which can co-operate with a corresponding female connector present in the device 1, so that the control means 15 will be electrically connected to the rest of the control unit of the heating device again after the control means 15 have been placed back in the compartment in question of the housing 1 of the heating device.

The control means, which are designed as one unit, can be placed into the heating device by means of well-known clamping or snap connections.

When the control means 15 have been removed, a space 43 has become available in the housing 1 of the device, in which space the gas holder 5 that has been described above is accommodated. As a result, the gas holder 5 in the heating device 1 becomes accessible after the removal of the control means 15, for example for replacement thereof.

According to the invention, the housing 1 is provided with a number of projecting parts 3a and 3b near a wall 1c for mounting the heating device 1 on a wall of the space to be heated. More in particular, said projecting parts are hollow, tubular pipe members, the pipe member 3a forming the inlet 3a for the outside air, which is located outside the space to be heated (Figure 1) and the pipe member 3b forming the outlet 3b for exhausting the combustion gases from the gas burner 4, which is located outside the space to be heated. The two pipe members 3a and 3b are bevelled at their free end, as is indicated at 25. The function of said bevel will be explained in more detail hereinafter.

In connection with the mounting of the heating device 1 on a wall of the space to be heated, for example the interior/body of car, the exact position where holes are to be drilled through the wall (for example the bottom plate or the body of the vehicle to be heated) can be marked by means of a template (not shown) which is supplied with the device. After the holes have been drilled through the wall of the space to be heated, the two pipe members 3a and 3b can be passed through the holes, so that the free ends of the two pipe members 3a and 3b are located outside the space to be heated. This is also necessary because outside air for the gas burner 4 is drawn in via the pipe member 3a, whilst the combustion gases produced by the gas burner 4 must be exhausted to the outside environment again via the pipe member 3b, which is done so as not to pollute the air inside the interior space to be heated.

In order to obtain a solid fixation of the heating device 1 to the wall of the space to be heated, the pipe members 3a and 3b may be externally threaded, so that the heating device can be attached to the wall of the space to be heated, on the side remote from the space to be heated, by means of a correspondingly threaded nut.

Another method of fixation is disclosed in Figures 5A and 5B, in which the outside surface of each pipe member 3a, 3b is provided with a number of ridges 26. In order to obtain a solid fixation of the heating device to the wall of the space to be heated, said ridges 26 can co-operate with the edge of each borehole 36 formed in the wall 33 of the space to be heated.

Because the free ends 25 of each pipe member 3a, 3b are positioned in the outside atmosphere, however, there is a risk - especially when the heating device is used in a car - of the open ends 25 of each pipe member 3a, 3b becoming clogged by splashing dirt. Furthermore, rain water may find its way into the heating device via the pipe members 3a, 3b and cause damage to the construction. According to the invention, a protective cover 27 may be arranged over the free ends of each pipe member 3a, 3b in order to avoid these problems. Although a protective cover 27 may be used for each pipe member 3a or 3b, it is also possible to use only one protective cover 27, which is fitted over all the pipe members 3a, 3b. Such a construction is possible because the two projecting pipe members 3a, 3b are positioned close together.

As Figure 5B discloses, the protective cover 27 is provided with an opening 27a for each projecting pipe member 3a, 3b. In order to obtain a proper fixation of the heating device 1 by means of the protective cover 27, the ridges 26 of each pipe member can co-operate with the edge of each opening 27a of the protective cover 27. A solid and vibration-resistant fixation of the heating device 1 to the wall 36 may be obtained in combination with the co-operation between the ridges 26 of each projecting pipe member with the edge of each borehole 36 formed in the wall 33 of the space to be heated. An additional fixation can be obtained in making use of a double-sided adhesive layer (not shown), which may be present between the wall 1c and the floor covering 35 of the car interior, so as to enable a more permanent attachment between the wall 1c and the wall 33. Likewise, an adhesive layer may be provided between the protective cover 27 and the wall 33 of the space to be heated. An isolating foam layer 31 may furthermore be arranged therebetween for the purpose of absorbing any vibrations while the vehicle is driving and for compensating unevennesses (for example burrs on the edge of the borehole 36) in the wall 33, as well as a layer of silicone paste 32 for forming a seal against water.

The purpose of the bevelled free end 25 of each pipe member 3a and 3b is to prevent direct ingress of, for example, moisture into the heating device 1. With this construction, splashing water can enter the pipe member 3a, 3b only at an angle, it cannot find its way directly into the heating device 1. In addition to that, a larger outlet opening, in particular for the combustion gases, is created by the bevelled free end 25. Furthermore, the bevelled free ends 25 of the pipe members 3a, 3b will become clogged with dirt less easily. On the other hand, the bevelled free end 25 of each pipe member 3a, 3b makes it easier to pass the pipe member 3a, 3b through the boreholes 36 in the wall 33 of the space to be heated, especially when the heating device according to the invention is used in a vehicle, in which the pipe members 3a, 3b must be passed not only through the body 33, but also through the floor covering layer 35 and possibly through the insulating layer 34.

Likewise, the protective cover 27 comprises an open end 28 so as to facilitate the entry of outside air and the exhaustion of the combustion gases. The protective cover 27 furthermore comprises upright walls 30, which exhibit a kink at 29. Thus, splashing water or dirt cannot find its way directly into the heating device via the pipe members 3a, 3b.

Furthermore, several projecting pipe members may be used, for example two pipe members both for taking in the outside their and two pipe members for exhausting the combustion gases. Thus, the risk of one of the pipe members undesirably becoming clogged by splashing dirt is further reduced. In addition to that, an improved intake of outside air or exhaustion of the combustion gases can thus be obtained. On the other hand, in order to ensure a sufficient supply/exhaustion of the outside air/combustion gases, the diameter of the pipe member would have to be so large that specific tools would be required for the installation if only one pipe member would be used for the inlet of for the outlet. When more than one pipe member is used, each having a smaller diameter, the installation can be carried out by anyone, including the user, using standard tools.

## Claims

1. A device for heating a space, which device comprises
a housing with heating mains present therein;
at least one passage including an inlet and an outlet, which has been formed in the housing;
ventilating means arranged between the inlet and the outlet of said passage for supplying low-temperature air via the inlet and exhausting air having a higher temperature, which has been heated by the heating means, to the interior via said outlet, **characterized in that** the heating element is a gas burner and **in that** a second passage is present in the housing, which passage includes an inlet located outside said space and an outlet located outside said space, and wherein second ventilating means are placed between the inlet and the outlet of the second passage for supplying outside air for the gas burner via the inlet and exhausting combustion gases into the outside environment via the outlet.

2. A device according to claim 1, **characterized in that** the housing comprises a connection for a gas holder.

3. A device according to claim 1 or 2, **characterized in that** the gas inlet to the gas burner is at least partially located in the second passage or is in direct communication with the outside environment.

4. A device according to any one or more of the preceding claims, **characterized in that** the two passages in the housing are separated from each other, although they are in heat-exchanging contact with each other.

5. A device according to claim 4, **characterized in that** the two passages are positioned side by side.

6. A device according to claim 4 or 5, **characterized in that** the directions of flow of the air flows through the two passages are of opposite sense.

7. A device according to any one or more of the preceding claims, **characterized in that** the combustion gases to be exhausted are in heat-exchanging contact with the outside air to be supplied.

8. A device according to claim 7, **characterized in that** the gas holder is in heat-exchanging contact with the pre-heated outside air.

9. A device according to any one or more of the preceding claims, **characterized in that** control means are arranged in the housing for turning the heating means on or off partly on the basis of the temperature difference between the space and the outside environment, the temperature inside and/or outside the space, the air humidity, the time, etc.

10. A device according to claim 9, **characterized in that** the control means can be removed from the device for adjustment or programming of the device.

11. A device according to claim 9 or 10, **characterized in that** said control means comprise sensors, which are arranged on the housing and/or in the air.

12. A device according to any one or more of the preceding claims, **characterized in that** a power source, for example a battery, is present in the housing.

13. A device according to any one or more of the preceding claims, **characterized in that** the housing is provided with fixing means for fixing the housing round the upper edge of the window in a door of the vehicle.

14. A device according to claim 13, **characterized in that** said fixing means consist of a slot, in which the upper edge of the window can be received.

15. A device according to claim 13 or 14, **characterized in that** the housing is provided with at least one flexible strip for sealing a chink in the window.

16. A device according to any one or more of the preceding claims, **characterized in that** the shape of the inlet and outlet openings is adjustable.

17. A device according to any one or more of the preceding claims, **characterized in that** the device can be mounted on a wall of the space to be heated.

18. A device according to claim 17, **characterized in that** the housing is provided with at least two projecting parts, which projecting parts can be passed through corresponding boreholes formed in the wall for mounting the heating device.

19. A device according to claim 18, **characterized in that** said projecting parts are hollow, tubular pipe members, one pipe member forming the inlet located outside the space to be heated and the other pipe member forming the outlet located outside the space to be heated.

20. A device according to claim 19, **characterized in that** a protective cover, which is open on one side, can be placed over the pipe members extending through the wall.

21. A device according to claim 20, **characterized in that** said protective cover is provided with a number of openings, through which the projecting pipe members can be passed.

22. A device according to any one or more of the claims 18 - 21, **characterized in that** said pipe members are externally threaded for mounting of the device on the wall on the side remote from the space by means of a nut.

23. A device according to any one or more of the claims 18 - 21, **characterized in that** said projecting parts are provided with ridges on the outside surface thereof.

24. A device according to claim 23, **characterized in that** said ridges co-operate with the boreholes that have been formed in the wall.

25. A device according to claim 23 or 24, **characterized in that** said ridges co-operate with the edge of the openings formed in the protective cover.

26. A device according to any one or more of the claims 19 - 25, **characterized in that** the free end of each pipe member is bevelled.

27. A device according to any one or more of the claims 20 - 26, **characterized in that** the walls of the protective cover exhibit a kink.
